# EUROPEAN PATENT APPLICATION

(11) **EP 3 970 481 A1**
(43) Date of publication of application: **23.03.2022**
(21) Application number: 20383134.2
(22) Date of filing: 22.12.2020
(51) Int. Cl.: A01K 5/02, A01K 15/02

(54) **ENVIRONMENTAL ENRICHMENT DEVICE FOR THE PREVENTION OF TAIL-BITING IN PIG FARMS**

(30) Priority: 22.09.2020 ES 202032062 U
(71) Applicant: Sociedad Cooperativa Ganadera de Caspe, 50700 Caspe (Zaragoza) (ES)
(72) Inventor: Cirac Lasheras, Sergio, 50700 Caspe Zaragoza (ES)
(74) Representative: Herrero & Asociados, S.L.

(57) **Abstract**

The purpose of the invention is to provide a device to control the exploratory behaviour of the animals adequately, under intensive conditions, to prevent the biting of tails or caudophagia. To this end, the device is constituted from a vertically elongated hopper (1), open above, which ends below in an element similar to a funnel (2) with a lower opening (3) for dispensing the product contained internally, opening (3) which is assisted by a sliding blocking element (4) that ends above in an agitator element (6, 7) of the product contained in the hopper. The device includes the means for wall mounting (17, 18).

## Description

Environmental enrichment device for the prevention of tail-biting in pig farms.

### SECTOR OF THE ART

This invention concerns a dispensing hopper for pigs specially designed to constitute an environmental enrichment device for pigs.

The object of the invention is to provide a device to control the exploratory behaviour of these animals adequately, under intensive conditions, to prevent the biting of tails or caudophagia.

More concretely, the device of the invention promotes the attention and curiosity of the animals in the pen, who find in the device a reward toy, and keeps their interest in this device active and focused, preventing possible behaviours and outbreaks of caudophagia, while at the same time allowing food to be dispensed in a controlled manner according to the needs of each animal, thus preventing the food from being wasted as well as keeping the environment clean.

### BACKGROUND OF THE INVENTION

The natural behaviour of the pig is based on rooting and nibbling, due to its social and exploratory instinct, seeking physical contact with their peers or other elements of their environment, such as substrates to manipulate and chew on. This behaviour can also be associated with an episode of aggressiveness to establish the hierarchy in the group. When the natural behaviour of rooting is intensified, it results in the process of caudophagia (tail-biting), an alteration of the behaviour that is frequent in intensive swine production. Caudophagia is a behavioural disorder in pigs, which consists of a form of cannibalism of the tails of other pigs, although other parts of the body such as ears and flanks may also be affected. This problem usually occurs in three stages:
1.- Nibbles: the animal nibbles the tail of another pig, with little or no reaction by the receptor; this lack of response can make it difficult to detect the aggression.
2.- At a given moment, the nibbles become bites, resulting in wounds and bleeding.
3.- Caudophagia: the appearance of the blood attracts other pigs, and several animals become biting individuals who get bitten. The frequency increases frantically, and the bites get worse, even resulting in the cannibalism of the tail. Caudophagia is often associated with infections, resulting in abscesses in the spine or other parts of the body. The pain of the wounds has negative effects on the behaviour, health, and growth of the animals, and causes significant economic losses, both on the farm itself as well as in the total or partial seizures of carcases at the slaughterhouse.

Consequently, caudophagia is a problem of multifactorial aetiology and difficult to manage, which, among other factors, may be associated with poor management and environmental conditions. In an appropriate production situation, there is a balance between the biological needs of the animals and their environment. In the event of imbalances, outbreaks of cannibalism can occur, and in particular of caudophagia, that are triggered in response to boredom, frustration, and insufficient stimulation, together with other negative environmental and management factors that can increase the stress levels of the pigs.

Tail-cutting in piglets (or tail-docking) is a practice commonly used to prevent caudophagia, but the procedure can cause pain, and its effectiveness is debatable. That is why routine tail-cutting is no longer allowed by the European Union because it does not help resolve the causes of caudophagia, just the symptoms. EU legislation regulates that it can only be carried out when it is evident in the sows' teats or the ears or tails of the pigs, but other prevention measures must be applied before the tail-docking.

One of the most important aspects in the prevention of tail-biting is that animals are able to express their exploratory behaviour in an appropriately. Under intensive conditions, the presence of enrichment material favours the expression of such behaviour and helps prevent the tail-biting.

The provision of bed material often not only ensures that pigs have access to clean enrichment material but also provides the novelty that stimulates the exploration and manipulation activities and is therefore considered the most appropriate enrichment material. However, in hot climate regions, the use of a straw bed or similar substrate is very rare, as it can increase the effective temperature perceived by the animal and have negative consequences on the food consumption, growth, and well-being. In addition, these materials are difficult to use on farms with slatted floors, as they can pass through the grate and cause problems in maintaining and managing the slurries. Therefore, the material used must not only meet the behavioural needs but also be compatible with farm management. When it is not possible to offer enrichment in the form of bed material, as in systems with integral slatted flooring, it is possible to provide materials such as the same straw, hay, alfalfa, or forage, by means of feeders or dispensers. The material management should be sufficient only for daily use, ensuring that the animals remain interested and that they consume the material instead of it falling through the grate. The position of the enrichment material also affects how the pigs interact with these objects.

### EXPLANATION OF THE INVENTION

The environmental enrichment device that is recommended for the prevention of caudophagia on pig farms solves the above problems in an entirely satisfactory manner, based on a simple but effective solution.

For this purpose, the device of the invention consists of a dispensing hopper of enrichment material initially designed for the supply of straw/chopped straw, in such a way that its location and disposition in the pen are easily accessible and attractive for the animals and allows them to develop the exploratory behaviour characteristic of their species, contributing to the prevention of caudophagia in pig farms and increasing the animal welfare in the pens, in compliance with current regulations.

More concretely, the device consists of an essentially prismatic-rectangular vertical hopper, which connects and ends in a structure in the form of a funnel, being an element to which the animal has access, through which it can obtain the enrichment material contained in the hopper: straw, chopped straw, forage, etc.

Inside this structure made up of these two parts, there is a vertical rod with different blades oriented perpendicular along its length, and ending in a toothed plastic ball that, by its size and diameter, fits perfectly in the mouth/exit of the funnel that contacts the animal.

This assembly acts as an agitator and dispenser of the enrichment material, since by the mentioned adjustment at the extreme end, it needs the stimulus of the animal (push up the ball with its muzzle), to allow the dosing and dispensing of the material.

This provides dual functionality:
On the one hand, it promotes the attention and curiosity of the animals in the pen that find in the device a "reward toy" and keeps their interest in this device active and focused, avoiding possible behaviours and outbreaks of caudophagia.

On the other hand, the device offers an accurate dosification of the enrichment material (chopped straw or other), avoiding its waste and losses, as well as keeping the environment clean.

The agitator is held in place inside the hopper by a set of plate and rod acting as a support. The hopper also incorporates a guide/support system to allow easy and practical anchoring of the hopper to the desired height for the operation.

From the structure described above, the following benefits are derived:
- Prevents the behaviours and outbreaks of caudophagia in intensive pig farms.
- Promotes the development of exploratory behaviour in pigs, reducing the level of stress, minimising fights between animals, and increasing animal welfare in pens in compliance with current legislation
- The enrichment material made available through the device does not represent any danger or health risk to the animals in accordance with the requirements for the choice of enrichment materials covered by current animal welfare legislation, such that these materials are accessible, clean, explorable and manipulable, chewable, and edible.
- They offer an "extra-nutritional" medium that achieves a satiating effect on pregnant sows in addition to the prebiotic effect of the fibre and promoter of intestinal health, improving the digestion of the diet for piglets and fattening pigs.
- The hopper is adaptable and allows the incorporation of different enrichment materials: straw, chopped straw, forage, etc.
- It allows maintaining the interest of the animals by changing the material supplied, or by changing the location periodically, at different heights and/or locations within the pen, such that the device presents great and easy adaptability.
- It avoids waste and loss in dispensing enrichment material, keeping the environment clean.
- Adjustable capacity of the hopper, according to the number of animals in the pen
- Simple, practical, and functional design. Its design and the materials used in its construction allow for easy and effective cleaning, guaranteeing the biosecurity of the prototype between different breeding groups.
- Unlike other conventional dispensers available on the market, because of its anchoring system and location in the operation, it does not compete or interfere with other elements of access to water and food. Similarly, it does not occupy space in the total available surface area per pen, respecting the minimum density and surface area per animal within the same pen.
- This is an easily scalable device, with reduced manufacturing costs that can be produced on a large scale based on market demand.

### BRIEF DESCRIPTION OF THE DRAWINGS

To complement the description to be presented hereafter, and to help to understand better the characteristics of the invention according to a preferred practical embodiment thereof, a set of drawings accompanies the said description as an integral part thereof, wherein the following has been represented in an illustrative and non-limiting manner:
Figure 1.- shows a perspective view of an environmental enrichment device for the prevention of caudophagia on pig farms developed in accordance with the object of this invention in an operating situation on the corresponding pen.
Figure 2.- shows a top-down perspective view of the device.
Figure 3.- shows a front-facing perspective detail of the dispensing agitator element included inside the device.
Figure 4.- shows a perspective detail of the support planned for the agitator in Figure 3.
Figure 5.- shows a front-facing perspective detail of the hopper guide bracket.
Figure 6.- shows a perspective view of the hopper fastening elements to the guide bracket.

### PREFERRED EMBODIMENT OF THE INVENTION

In viewing the indicated figures, it can be observed how the environmental enrichment device for the prevention of caudophagia in pig farms is constituted, beginning with a hopper whose main body (1) of prismatic-rectangular configuration, open at both ends, which, in the example of the chosen embodiment, is made from plastic material without ruling out other materials, and that, in correspondence with its lower extremity, is linked to a kind of funnel (2) of truncated cone configuration with a lower opening (3) for dispensing the product, which opening (3) is blocked by a toothed plastic ball (4) with a larger diameter protruding slightly through the opening (3) and that acts as an element that draws the attention and curiosity of the animals (5) in the pen, so that the toothed plastic ball (4) rides up on a vertical rod (6) to which perpendicular blades (7) are attached and that act as stirring elements of the material contained in the hopper, such as straw, hay, alfalfa or forage, duly chopped, preventing this material from getting stuck in the hopper.

Thus, the animal's push on the toothed plastic ball (4) due to its curiosity will unblock the opening (3) of the hopper and allow the controlled output of the food, becoming blocked again when the animal stops pressing against the toothed plastic ball (4).

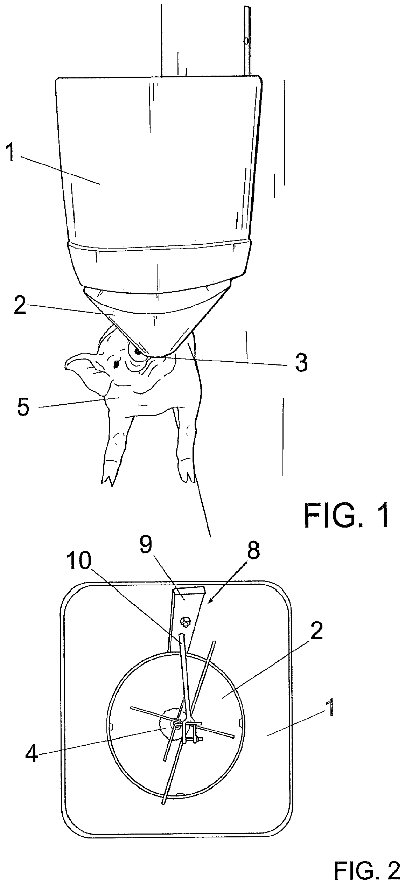

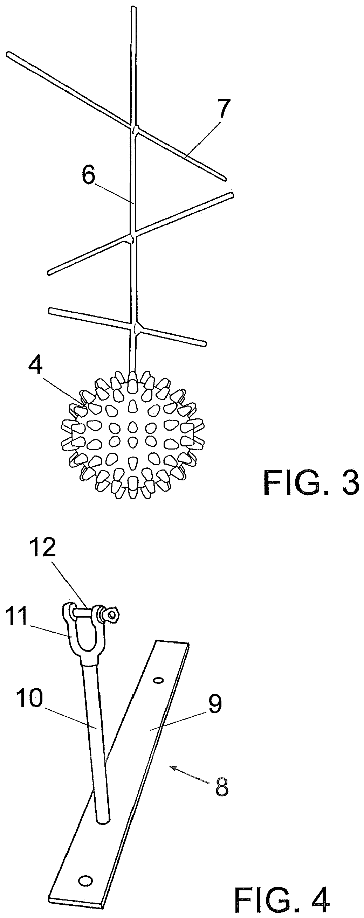

The agitator rod (6) is vertically stabilised by the support (8) shown in detail in figure 4 and also visible in figure 2, materialised in a plate (9) which is fixed by screwing to the inner face of the main body (1), and which includes a horizontal arm (10) ending in a clevis (11) with a pin (12) which determines a kind of ring in which the upper end of the rod (6) moves vertically.

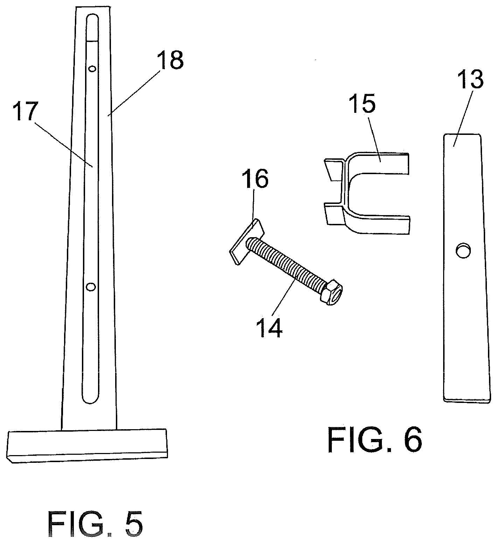

According to figures 5 and 6, the main body (1) of the hopper is externally secured with a second plate (13), which is attached to the inner plate (9) by screws, such that one of these screws (14) passes through an "H" profile (15) and ends in an expansion (16) acting as a stop and guide running along a longitudinal slot (17) provided in a tubular element serving as an adjustable support (18).

In this way, the support can be fixed vertically to the pen face at an appropriate point, while, by virtue of the travel along the longitudinal groove (17) and the tightening and loosening of the screw (14), the hopper may be arranged at different heights to prevent the animals from losing interest in the hopper.

## Claims

1. ^{st}. - Environmental enrichment device for the prevention of caudophagia in pig farms, **characterised in that** it is constituted by a vertically elongated hopper, open above, ending below in an element similar to a funnel, with a lower opening (3) for dispensing the product contained internally, opening (3) that is assisted by a sliding blocking element, ending above in an element to stir the product contained in the hopper, having anticipated that the hopper will include means for fixation to the wall.

2. ^{nd}. - Environmental enrichment device for the prevention of caudophagia in pig farms, according to claim 1^{st}, **characterised in that** the sliding blocking element ends in a toothed plastic ball (4), larger in diameter than the opening (3).

3. ^{rd}. - Environmental enrichment device for the prevention of caudophagia in pig farms, according to claim 1^{st}, **characterised in that** the hopper that constitutes the main body (1) is of prismatic-rectangular configuration that is ended below in a kind of funnel (2) of truncated cone configuration.

4. ^{th}. - Environmental enrichment device for the prevention of caudophagia in pig farms, according to claim 1^{st}, **characterised in that** the agitator element of the product contained in the hopper is positioned on a vertical rod (6) to which perpendicular blades (7) are attached, a rod which is vertically stabilised by a support (8) ending in a plate (9) which is fixed by screwing to the inner face of the main body (1), and which includes a horizontal arm (10) ending in a clevis (11) with a pin (12) which determines a kind of ring through which the upper end of the rod (6) moves vertically.

5. ^{th}. - Environmental enrichment device for the prevention of caudophagia in pig farms, according to claim 1^{st}, **characterised in that** the means for fixing the hopper to a wall include a support (18) by means of which the hopper is height adjustable along a longitudinal groove (17) provided for in the support and the corresponding stabilisation means associated with the hopper.
